**Europäisches Patentamt**

**European Patent Office**

**Office européen des brevets**

(11) Numéro de publication: **0 080 947**
**B1**

(12) **FASCICULE DE BREVET EUROPEEN**

(45) Date de publication du fascicule du brevet:
17.04.85

(21) Numéro de dépôt: **82402156.2**

(22) Date de dépôt: **26.11.82**

(51) Int. Cl.⁴: **F 16 H 1/44**

(54) **Dispositif de blocage de différentiel.**

(30) Priorité: **30.11.81 FR 8122364**

(43) Date de publication de la demande:
**08.06.83 Bulletin 83/23**

(45) Mention de la délivrance du brevet:
**17.04.85 Bulletin 85/16**

(84) Etats contractants désignés:
**DE GB IT SE**

(56) Documents cités:
**DE - C - 655 398**
**FR - A - 490 808**
**FR - A - 1 158 997**
**FR - A - 1 310 946**
**FR - A - 1 582 404**
**FR - A - 2 380 159**
**US - A - 2 569 533**
**US - A - 2 720 796**
**US - A - 3 499 349**

Ouvrage "Technique Automobile", J. CHAGETTE tome
II, sixième édition de 1977, édité par DUNOD, pages 67 à
69

(73) Titulaire: **RENAULT VEHICULES INDUSTRIELS Société
Anonyme dite:, 129 rue Servient "La Part Dieu",
F-69003 Lyon (FR)**

(72) Inventeur: **Condamin, Bernard, 28 bis rue du Lieutenant
Colonnel Girard, F-69007 Lyon (FR)**
Inventeur: **Mouquin, Félix, 12 rue E. Mole,
F-69300 Villeurbanne (FR)**

(74) Mandataire: **Hirsch, Marc-Roger, 34 rue de Bassano,
F-75008 Paris (FR)**

BUNDESDRUCKEREI BERLIN

# Description

La présente invention s'applique à un dispositif de blocage partiel du différentiel d'un véhicule automobile permettant d'augmenter le couple transmis par friction entre les roues gauche et droite de l'essieu du différentiel lorsque ces roues tournent à des vitesses angulaires différentes et de réduire ainsi les risques de patinage du véhicule par manque d'adhérence sur une seule des roues motrices.

Les différentiels classiques constitués généralement par un train d'engrenages coniques et comportant un ensemble boîtier-couronne entraîné par un arbre de transmission et portant des axes de satellites et les satellites ainsi que les deux planétaires correspondant chacun à un arbre de roue, permettent aux roues motrices droite et gauche de recevoir le même couple moteur, tout en tournant à des régimes différents, dans les virages par exemple. Si les roues d'un côté du véhicule n'ont plus d'adhérence du fait de l'état de la route (plaque de verglas, flaque de boue), le véhicule perd toute motricité par suite de l'emballement de la roue qui manque d'adhérence et la transmission subit des chocs à la reprise d'adhérence.

Dans les véhicules »tous terrains«, l'emballement d'une roue qui manque d'adhérence est évité par un blocage positif du differentiel par crabotage. Ce blocage commandé par le conducteur, rend les planétaires solidaires en rotation de la couronne d'entraînement par le pignon conique.

Pour les véhicules routiers usuels, le risque de patinage est faible et la solution »véhicule tous terrains« grèverait inutilement leur prix. On se contente donc d'un système de blocage de différentiel automatique à friction ou à coincement, qui permet en cas de perte d'adhérence d'un côté, la transmission aux roues de l'autre côté d'une partie suffisante du couple moteur pour permettre au véhicule de sortie d'un mauvais passage où l'adhérence est défaillante d'un côté du véhicule seulement.

Les différents systèmes de blocage partiel et automatique du différentiel utilisés habituellement présentent divers inconvénients parmi lesquels on peut citer pour les systèmes à friction par écartement axial des planétaires, la variation de la distance conique des dentures du différentiel par suite de l'usure des moyens de friction axiale. Il s'ensuit en général une usure prématurée des dentures coniques du différentiel, préjudiciable à la fiabilité du différentiel lui-même.

Les autres systèmes de blocage partiel du différentiel présentent soit une grande complexité lorsqu'ils sont relativement fiables et par voie de conséquence sont d'un prix de revient élevé, soit un encombrement trop important pour permettre leur insertion dans un différentiel de type standard.

Ainsi, FR-A-1 582 404 décrit un dispositif de blocage partiel à friction du différentiel d'un véhicule automobile, à l'aide d'un moyen de friction interposé entre un ou les deux planétaires du différentiel et le boîtier de différentiel solidaire de la couronne d'entraînement des roues. Le moyen de friction constitué par trois corps de blocage débrayables est apte à exercer une action de friction sur un alésage prévu dans un évidement du carter de différentiel lorsque les vitesses de rotation des planétaires et de la couronne dentée sont différentes. Il se produit ainsi une action de freinage progressivement croissante entre les corps de blocage et le carter de différentiel qui permet, lorsqu'une roue motrice tourne à vide, de transmettre à l'autre roue motrice un couple croissant avec le glissement de la roue qui patine.

Il est par ailleurs connu d'utiliser un segment en forme d'anneau élastique fendu normalement disposé libre sans serrage sur une portée lisse, pour réaliser un embrayage ou un freinage par friction de deux organes rotatifs l'un par rapport à l'autre. L'emploi d'un tel principe dans la synchronisation des boites de vitesses pour véhicules automobiles est par exemple illustré dans l'ouvrage »Technique Automobile« de J. CHAGETTE, tome II, sixième édition de 1977, édite par DUNOD, pages 67 à 69.

L'un des buts de la présente invention est précisément d'éviter les inconvénients énumérés précédemment et de réaliser un système de blocage de différentiel à friction qui utilise la friction d'un segment en forme d'anneau élastique fendu ou ouvert et qui reste pratiquement immobilisé dans son alésage de réception aussi longtemps que le véhicule se déplace en ligne droite sans patinage d'une roue motrice ou en virage léger à vitesse modérée.

A cet effet, et conformement à l'invention le dispositif de blocage partiel à friction du différentiel d'un véhicule automobile à l'aide d'un moyen de friction interposé entre un ou deux planétaires du différentiel et le boitier de differentiel solidaire de la couronne d'entrainement des roues, le moyen de friction étant apte à exercer une action de friction sur un alésage solidaire du boîtier de différentiel lorsque les vitesses de rotation des planétaires et de la couronne dentée sont différentes, est caractérisé en ce que le moyen de friction est constitué par au moins un segment élastique annulaire ouvert logé en compression dans l'alésage sur la paroi intérieure duquel il exerce une pression radiale vers l'extérieur et en ce que le segment est relié en rotation au planétaire par l'intermédiaire d'un ergot relié au moins en rotation au planétaire correspondant et engagé entre les deux faces ouvertes des extrémités du segment qui est de préférence refermé sur l'ergot avec un jeu d'engagement pour être relié en rotation au planétaire.

Selon une forme de réalisation, l'ergot est porté par une pièce annulaire reliée en rotation, notamment par des cannelures, à l'arbre de roue correspondant.

Selon un autre mode de réalisation l'ergot est porté par une pièce annulaire reliée en rotation, notamment par des cannelures, au planétaire correspondant.

L'ergot peut être rendu rigidement solidaire du planétaire correspondant par tout moyen compact et rapide tel que l'engagement à force dans un alésage du planétaire ou une soudure, notamment par bombardement électronique.

La forme du segment est choisie pour que la pression radiale qu'il exerce sur la paroi de l'alésage du boitier de différentiel soit répartie sur toutes sa périphérie aussi bien à l'état neuf qu'à l'état usé. Cette pression radiale est déterminée par la déformation du segment après son montage dans l'alésage et diminue au fur et à mesure de l'usure du segment qui est heureusement réduite par le fait que les surfaces de friction sont immergées dans l'huile du carter différentiel. La pression radiale exercée sous l'effet de l'élasticité du segment par la surface extérieure du segment sur la surface de l'alésage peut être renforcée par un effet d'autoserrage dû à la friction.

D'autres buts, avantages et caractéristiques de la présente invention apparaîtront mieux à la lecture de la description qui va suivre de divers modes de réalisation de l'invention, faite à titre non limitatif et en regard du dessin annexé où:

la figure 1 représente en coupe avec figuration partielle du boîtier de différentiel un premier mode de réalisation du dispositif de blocage partiel à friction d'un différentiel;

la figure 2 représente en vue partielle de dessus l'ergot reliant le segment de friction au planétaire du différentiel;

la figure 3 représente en coupe avec figuration partielle du boîtier de différentiel, un deuxième mode de réalisation de l'invention;

la figure 4 représente en coupe du même type un troisième mode de réalisation de l'invention.

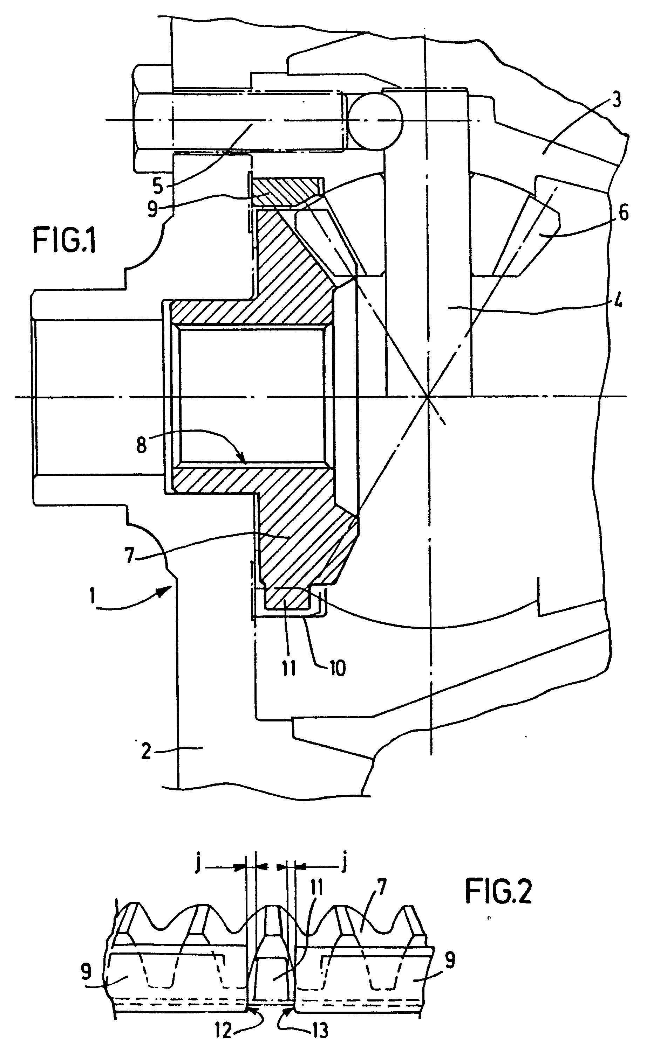

Le différentiel représenté sur la figure 1, d'un type utilisé pour des véhicules routiers utilitaires, comporte, enfermé dans un carter de pont non représenté un boîtier de différentiel 1 constitué respectivement d'une roue d'engrenage conique 2 dont les dents non représentées sont entraînées en rotation par un pignon conique relié au moteur du véhicule et d'un flasque de fermeture 3 qui porte le ou les axes 4 des satellites, immobilisé par des vis de blocage 5. Les éléments principaux du différentiel sont constitués par le jeu des satellites coniques 6 dont un seul est représenté et qui engrènent de chaque côté de l'essieu avec un planétaire 7 à engrenage conique dont les cannelures intérieurs 8 sont en prise avec l'arbre de roue non représenté pour l'entraînement de la roue du côté gauche de la figure 1.

Selon l'invention, un segment élastique ouvert 9 est logé en compression dans un alésage 10 ménagé dans le flasque 3 du boîtier de differentiel 1 et un ergot 11, ménagé sur la surface extérieure périphérique du planétaire 7, vient s'engager entre les deux faces ouvertes 12 et 13 des extrémités du segment refermé sur l'ergot pour relier en rotation avec un jeu d'engagement j le segment 9 au planétaire 7 (voir la figure 2).

Pendant la marche normale du véhicule automobile équipé du dispositif de blocage partiel du différentiel selon l'invention, le segment 9 reste pratiquement immobilisé dans son alésage 10 aussi longtemps que le véhicule se déplace en ligne droite ou en virage léger à vitesse modérée car les réactions de friction développées entre la surface extérieure du segment 9 et l'alésage 10 s'opposent à la mise en rotation du planétaire 7 par rapport au boîtier de différentiel 1. Dans un virage serré ou rapide, les différences de couple resistant entre les roues droite et gauche du véhicule sont suffisantes pour vaincre ces réactions de friction et le planétaire 7 qui auparavant se contentait de venir battre par son ergot 11 les faces 12 ou 13 du segment à chaque apparition d'une différence de couple entre les roues droite et gauche, est alors capable d'entraîner en rotation le segment 9 dans son alésage. La mise en rotation du segment 9 provoque un dégagement de chaleur par friction qui est aisément évacué par l'huile du carter de pont dans laquelle baigne le différentiel. Le segment 9 ne tourne à friction dans son alésage que pendant des durées limitées correspondant aux virages pris avec une décélération tangentielle élevée et la capacité du véhicule à aborder les virages à vitesse élevée n'est que peu réduite par rapport aux véhicules du même type non munis du blocage partiel du différentiel.

Lorsque le véhicule aborde une zone où l'adhérence est sérieusement défaillante sous l'une des roues motrices seulement, ce qui constitue le cas le plus courant de manque d'adhérence en dehors de la marche sur le verglas ou la neige, la roue dépourvue momentanément d'adhérence tend à s'emballer sous l'effet de la mise en rotation du boîtier de différentiel 1 par le pignon conique d'entraînement du moteur. Dans ce cas, le flasque 3 tourne autor du segment 9 relié en rotation, par l'ergot 11, au planétaire 7 et provoque par friction sur ce segment 9 un couple d'entraînement qui se transmet à la roue qui repose sur une surface de roulement dotée d'une adhérence plus élevée. Le couple ainsi transmis par le segment 9 est en général suffisant pour faire sortir le véhicule de la mauvaise passe dans laquelle il s'est engagé. On doit remarquer qu'à la différence des systèmes de blocage de différentiel par crabotage, la mise en œuvre du système de blocage de différentiel selon l'invention est automatique. L'ergot 11 peut venir de forge ou de fonderie avec le planétaire 7 ou bien il peut être rapporté par engagement à force dans un alésage du planétaire ou par soudure, notamment par bombardement électronique afin de laisser intacte la structure physico chimique souvent cémentée et trempée de l'acier à haute résistance du planétaire. Suivant l'invention, un segment 9 placé indifféremment sur l'un des deux planétaires 7 correspondant aux roues droite et gauche suffit pour pallier la défaillance de l'adhérence de l'une ou l'autre de ces roues, mais on peut bien entendu prévoir deux segments — un sur chacun des planétaires — dont les effets s'ajouteront. Le segment unique 9 qui constitue néanmoinsle moyen de réalisation le plus pratique et le plus compact de l'invention peut être remplacé par plusieurs segments parallèles et/ou concentriques reliés chacun à un ergot 11, les ergots 11 de tous ces segments pouvant être répartis sur la surface extérieure du planétaire 7.

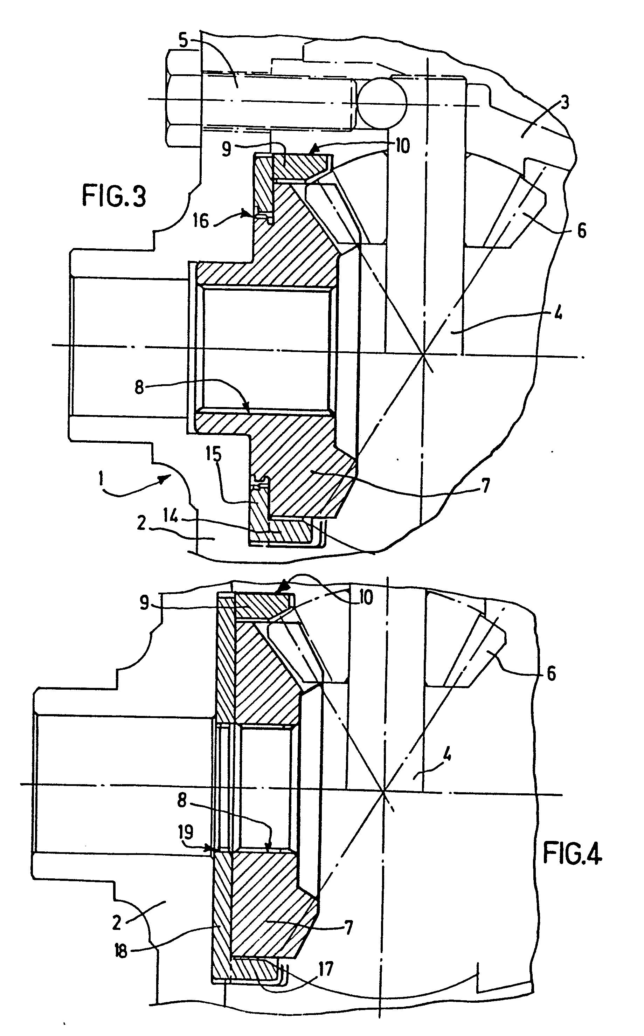

Dans la variante de réalisation représentée sur la figure 3, l'ergot 14 assurant la liaison entre le planétaire 7 et le segment 9 est porté par une pièce annulaire 15 reliée en rotation par des cannelures 16 au planétaire 7.

Selon la variante représentée sur la figure 4, l'ergot 17 de liaison entre le planétaire 7 et le segment 9 est porté par une pièce annulaire mince 18 reliée en rotation par des cannelures 19 à l'arbre de roue correspondant lui-même relié par des cannelures 8 au planétaire 7.

Les modes de réalisation des figures 3 et 4 permettent d'éviter de rapporter l'ergot sur le planétaire 7 dont la structure physico chimique à haute résistance supporte mal les opérations d'usinage ou de soudre. De plus, la disposition des pièces annulaires 15 et 18 augmente les forces et les surfaces de friction entre le planétaire 7 et le boîtier de différentiel 2.

## Revendications

1. Dispositif de blocage partiel à friction du différentiel d'un véhicule automobile, à l'aide d'un moyen de friction interposé entre un ou deux planétaires (7) du différentiel et le boitier de différentiel (1) solidaire de la couronne d'entrainement (2) des roues, le moyen de friction étant apte à exercer une action de friction sur un alésage (10) solidaire du boitier de différentiel (1) lorsque les vitesses de rotation des planétaires (7) et de la couronne dentée (2) sont différentes, caractérisé en ce que le moyen de friction est constitué par au moins un segment élastique annulaire ouvert (9) logé en compression dans l'alésage (10) sur la paroi intérieure duquel il exerce une pression radiale vers l'extérieur et en ce que le segment (9) est relié en rotation au planétaire (7) par l'intermédiaire d'un ergot (11, 14, 17) relié au moins en rotation au planétaire (7) correspondant et engagé entre les deux faces ouvertes (12, 13) des extrémités du segment (9).

2. Dispositif selon la revendication 1, caractérisè en ce que le segment (9) est refermé sur l'ergot (11, 14, 17) avec un jeu d'engagement (j) pour être reliè en rotation au planétaire (7).

3. Dispositif selon l'une des revendications 1 ou 2, caractérisé en ce que l'ergot (17) est porté par une pièce annulaire (18) reliée en rotation, notamment par des cannelures (19), à l'arbre de roue correspondant.

4. Dispositif selon l'une des revendications 1 ou 2, caractérisé en ce que l'ergot (14) est porté par une pièces annulaire (15) reliée en rotation, notamment par des cannelures (16), au planétaire (7) correspondant.

5. Dispositif selon l'une des revendications 1 ou 2, caractérisé en ce que l'ergot (11) est rendu rigidement solidaire du planétaire (7) correspondant par un moyen compact et rapide tel que l'engagement à force dans un alésage du planétaire (7) ou une soudure, notamment par bombardemment électronique.

## Patentansprüche

1. Reibungsvorrichtung zum teilweisen Blokkieren des Differentialgetriebes eines Kraftfahrzeugs vermittels eines zwischen einem oder zwei Planetenrädern (7) des Differentialgetriebes und dem mit dem die Räder antreibenden Kranz (2) fest verbundenen Differentialgehäuses (1) angeordneten Reibungsmittels, wobei das Reibungsmittel fähig ist, auf eine mit dem Differentialgehäuse (1) fest verbundene Bohrung (10) eine Reibungswirkung auszuüben, wenn die Drehgeschwindigkeit der Planetenräder (7) und des Zahnkranzes (2) verschieden sind, dadurch gekennzeichnet, daß das Reibungsmittel durch wenigstens ein mit Preßsitz in der Bohrung (10) angeordnetes offenes, elastisches Ringsegment (9) gebildet ist, das auf die Bohrungsinnenwandung (10) einen nach außen gerichteten radialen Druck ausübt, und daß das Segment mit dem Planetenrad (7) durch eine wenigstens drehfest mit dem betreffenden Planetenrad (7) verbundene und zwischen die beiden offenen Stirnflächen (12, 13) der Enden des Segments (9) eingreifende Nase (11, 14, 17) drehfest verbunden ist.

2. Vorrichtung nach Anspruch 1, dadurch gekennzeichnet, daß das Segment (9) die Nase (11, 14, 17) mit einem Spiel (j) umgreift, derart, daß es mit dem Planetenrad (7) drehfest verbunden ist.

3. Vorrichtung nach einem der Ansprüche 1 oder 2, dadurch gekennzeichnet, daß die Nase (17) von einem insbesondere durch Keilnuten (19) mit der entsprechenden Radachse verbundenen Ringteil (18) getragen wird.

4. Vorrichtung nach einem der Ansprüche 1 oder 2, dadurch gekennzeichnet, daß die Nase (14) von einem insbesondere durch Keilnuten (16) mit dem entsprechenden Planetenrad (7) drehfest verbundenen Ringteil (15) getragen wird.

5. Vorrichtung nach einem der Ansprüche 1 oder 2, dadurch gekennzeichnet, daß die Nase (11) durch ein kompaktes und schnelles Mittel, wie Festpassung in einer Bohrung des betreffenden Planetenrades (7), oder Schweißung, insbesondere durch Elektronenbeschuß, mit dem entsprechenden Planetenrad (7) fest verbunden ist.

## Claims

1. A friction device for partially blocking the differential of an automotive vehicle by a friction means interposed between one or two planetary wheels (7) of the differential casing (1) integral with the wheel driving crown wheel (2), the friction means being adapted to exert a frictional action on a bore (10) integral with the differential casing (1) when the rotative speeds of the planetary wheels (7) and the toothed crown wheel (2) are different, characterized in that the friction means is constituted by at least one annular elastic open segment (9) mounted with pressure-fit in the bore (10) on the inner wall of which it exerts an outwardly directed radial pressure, and in that the segment is rotatively connected to the planetary wheel by a lug (11, 14, 17) at least rotatively connected to the corresponding planetary wheel (7) and engaged between the two open faces (12, 13) of the ends of the segment (9).

2. A device according to claim 1, characterized in that the segment (9) engages the lug (11, 14, 17) with a clearance (j) so as to be rotatively connected to the planetary wheel (7).

3. A device according to any one of claims 1 or 2, characterized in that the lug (17) is held by an anular piece (18) rotatively connected, especially by key-ways (19), to the corresponding wheel shaft.

4. A device according to any one of claims 1 or 2, characterized in that the lug (14) is held by an annular piece (15) rotatively connected, especially by key-ways (16), to the corresponding planetary wheel (7).

5. A device according to any one of claims 1 or 2, characterized in that the lug (11) is rendered rigidly integral with the corresponding planetary wheel (7) by compact and rapid means, such as tight engagement in a bore of the planetary wheel (7) or by welding, especially by electronic bombardement.

# FIG.1

# FIG.2

FIG.3

FIG.4